Europäisches Patentamt

(19) **European Patent Office**

Office européen des brevets

(11) Numéro de publication: **0 099 384**
**B1**

(12) **FASCICULE DE BREVET EUROPEEN**

(45) Date de publication du fascicule du brevet:
**03.08.88**

(51) Int. Cl.⁴: **H 01 R 13/658,** G 01 K 7/02

(21) Numéro de dépôt: **83900424.9**

(22) Date de dépôt: **25.01.83**

(86) Numéro de dépôt international:
**PCT/FR 83/00018**

(87) Numéro de publication internationale:
**WO 83/02690** (04.08.83 Gazette 83/18)

(54) **CONNECTEUR ELECTRIQUE PLAT A TROIS BROCHES.**

(30) Priorité: **28.01.82 FR 8201362**

(43) Date de publication de la demande:
**01.02.84 Bulletin 84/5**

(45) Mention de la délivrance du brevet:
**03.08.88 Bulletin 88/31**

(84) Etats contractants désignés:
**DE GB**

(56) Documents cités:
**CH - A - 297 149**
**FR - A - 1 093 086**
**FR - A - 1 416 506**
**FR - A - 1 448 935**
**GB - A - 1 050 889**

**IBM TECHNICAL BULLETIN, vol. 11, no. 6, November
1968, New York (US), E. Uberbacher: "Coaxial cable
shield terminator"**

(73) Titulaire: **ROGGEMAN, Jean Bernard, Les Meurgers
Sonchamp, F-78120 Rambouillet (FR)**

(72) Inventeur: **ROGGEMAN, Jean Bernard, Les Meurgers
Sonchamp, F-78120 Rambouillet (FR)**

ACTORUM AG

## Description

Domaine de l'invention

La présente invention concerne les connecteurs électriques, et se rapporte plus précisément à un connecteur plat à trois broches pour une sonde à résistance, un thermo-couple, ou toute sonde analogue délivrant un signal électrique.

Technique antérieure

On connaît déjà des connecteurs plats à deux broches pour thermo-couple, comprenant une pièce mâle et une pièce femelle destinées à être reliées chacune à l'un d'au moins deux conducteurs électriques principaux d'un câble comprenant une gaine qui entoure les conducteurs électriques, les pièces mâles et femelles étant formées chacune d'un corps en une matière électriquement isolante qui comporte d'une part une partie avant portant deux organes de contact principaux qui sont respectivement des organes de contact mâle et des organes de contact femelles, et présentant un logement s'ouvrant vers l'arrière et vers une face plane principale du corps et contenant des moyens de fixation des conducteurs principaux respectivement aux deux organes de contact principaux de la pièce mâle ou femelle correspondante, et, d'autre part, une partie arrière qui présente une cavité s'ouvrant également vers la face plane principale du corps et vers l'arrière par une découpe destinée au passage des conducteurs.

D'une façon générale, pour des raisons d'encombrement, les connecteurs de ce type doivent présenter un encombrement réduit au minimum. Il en résulte diverses contraintes quant à la disposition des organes principaux de contact mâles et femelles à l'intérieur du corps des deux parties mâle et femelle du connecteur.

En outre, dans les connecteurs connus, pour éviter tout court-circuit, il est nécessaire de séparer les moyens de fixation des deux conducteurs principaux dans le logement par l'intermédiaire d'une cloison d'isolation ou d'un espace suffisant, qui subdivise au moins partiellement le logement, au niveau des moyens de fixation. De tels moyens de fixation sont, par exemple, constitués par deux plaquettes conductrices, dont l'une au moins est flottante et dont l'autre peut être fixe ou flottante, ces deux plaquettes étant réunies par une vis de serrage qui les traverse, l'extrémité dénudée de chaque conducteur étant placée entre les plaquettes en position écartée, puis les plaquettes étant resserrées à l'aide de la vis.

Il est également connu de fermer le logement par un couvercle qui assure en même temps le blocage de la gaine entourant les deux conducteurs, afin d'éviter que ces derniers ne soient arrachés lorsqu'on ouvre le connecteur en désaccouplant la pièce mâle de la pièce femelle.

Pour diverses raisons, en particulier pour protéger les deux conducteurs d'un thermo-couple, par exemple, contre l'influence des parasites extérieurs, notamment des milieux très parasités, il serait souhaitable d'utiliser, pour délivrer des signaux électriques, des câbles protégés par une armature formant écran électrique, à la manière des tresses de blindage des câbles coaxiaux.

La solution la plus simple et qui paraît la plus évidente consiste à augmenter la largeur ou l'épaisseur de tels connecteurs plats, afin de leur adjoindre une broche supplémentaire, à laquelle serait relié le conducteur auxiliaire que constitue l'armature ou la tresse de blindage.

Or, il n'est pas souhaitable d'augmenter la largeur de tels connecteurs plats, car cela augmenterait considérablement leur encombrement.

Il n'est pas non plus possible d'augmenter leur épaisseur, puisque ces connecteurs doivent avoir une forme plate, de façon à réduire leur encombrement et la taille de l'obstacle qu'ils constituent dans certaines enceintes très encombrées par d'autres appareillages, circuits électriques ou électroniques, instruments scientifiques, etc.

Exposé de l'invention

La présente invention a pour but de remédier à ces inconvénients et se propose de créer un connecteur plat à trois broches, pour sonde telle qu'un thermo-couple, ayant le même encombrement qu'un connecteur plat connu à deux broches, mais comportant, sur chacune des pièces mâle et femelle du connecteur, un organe de contact électrique auxiliaire, qui permet l'utilisation d'un câble à écran protecteur constituant un conducteur auxiliaire qui, ainsi que les conducteurs principaux, est également entouré par la gaine.

A cet effet, l'invention a pour objet un connecteur du type décrit ci-dessus, et qui se caractérise en ce que chacune des deux pièces mâle et femelle du connecteur comporte l'un de deux organes de contact auxiliaires destinés à coopérer l'un avec l'autre lorsque les deux pièces du connecteur sont accouplées de sorte que les organes de contact principaux mâles de l'une coopèrent avec les organes de contact principaux femelles de l'autre, chacun des deux organes de contact auxiliaire débouchant à l'avant de la partie avant du corps de la pièce mâle ou femelle correspondante, et étant relié à la partie arrière de ce corps en débouchant dans la cavité afin d'être relié au conducteur auxiliaire en passant, par rapport à la face plane principale du corps, en-dessous des organes de contact principaux dans la partie avant et des moyens de fixation dans le logement, en occupant une position intermédiaire entre la position des deux organes de contact principaux correspondants.

Grâce à la disposition des organes de contact auxiliaires, chacun en-dessous des deux organes de contact principaux correspondants, et dans une position intermédiaire entre la position des deux organes de connexion principaux correspondants, on n'augmente pas l'encombrement du connecteur sans pour autant affaiblir la résistance mécanique d'un tel connecteur plat.

Cela est d'autant plus important que pour assurer un bon contact électrique entre les deux parties accouplées du connecteur, il est indispensable que les organes de contact principaux, qui sont des organes en forme de broches plates ou de section quelconque pour les organes mâles et des organes en forme de gaine constituée par exemple par une ou deux lames de contact élastiques à effet de ressort pour les organes de contact femelles, soient entourés sur toute la longueur, à l'intérieur des pièces mâle et femelle, d'une épaisseur maximale de matière isolante constitutive du corps des pièces mâle et femelle, sans être obligé d'augmenter l'encombrement du corps.

Les organes de contact mâles et femelles sont reliés par leur extrémité arrière débouchant dans le logement à des moyens de fixation aux conducteurs et ces moyens de fixation assurent avantageusement une fixation amovible, c'est-à-dire une liaison assurée par les plaquettes de contact serrées par des vis, et les organes de contact principaux sont nécessairement relativement écartés l'un de l'autre sur chacune des pièces mâle et femelle du connecteur.

Les connecteurs plats doivent présenter une certaine épaisseur, afin de loger les moyens de fixation aux conducteurs, et en particulier afin de recevoir l'extrémité des vis de serrage des plaquettes, sans que ces extrémités ne viennent en saillie par rapport à l'une des faces principales de chaque pièce et femelle du connecteur. Il est avantageux d'utiliser, sur le corps de chacune de ces deux pièces, l'espace disponible dans la zone intermédiaire en-dessous des deux organes de contact principaux correspondants, pour le logement de l'organe de contact auxiliaire correspondant.

La section de chaque organe de contact auxiliaire peut être réduite, ce qui permet de loger ce dernier dans la position précisée ci-dessus, sans être obligé d'augmenter la largeur ou l'épaisseur des pièces mâle et femelle du connecteur.

Etant donné cette faible section qu'il est possible de donner à chaque organe de contact auxiliaire, les moyens de fixation de chacun de ces organes de contact auxiliaire dans la pièce mâle ou femelle correspondante du connecteur sont choisis en correspondance, puisque les forces de frottement, lors de la coopération des organes de contact auxiliaires l'un avec l'autre, par exemple par l'introduction de ces organes l'un dans l'autre s'ils sont constitués sous la forme d'organes mâle et femelle, et lors de leur séparation, sont plus faibles que celles des organes de contact principaux.

Lorsque le connecteur est tel que, sur chacune des pièces mâle et femelle, les deux organes de contact principaux occupent des positions symétriques dans un plan parallèle à la face principale du corps correspondant, le logement de la partie avant du corps étant subdivisé par une cloison d'isolation électrique séparant au moins partiellement les moyens de fixation des deux conducteurs aux deux organes de contact principaux portés par ce corps, le connecteur selon l'invention se caractérise de plus en ce que chaque organe de contact auxiliaire est disposé dans le plan de symétrie des deux organes de contact principaux correspondants et passe sous la cloison d'isolation du corps de la pièce mâle ou femelle correspondante.

De préférence, les deux organes de contact auxiliaires du connecteur selon l'invention sont l'un un organe de contact mâle, constitué par exemple par une broche en forme de tige, et l'autre un organe de contact femelle, constitué par exemple par une broche en forme de tube, dans lequel l'organe de contact auxiliaire mâle est destiné à s'enficher.

Dans une forme préférée de réalisation, l'extrémité avant de la broche en forme de tube débouche dans la face avant de la partie avant du corps de l'une des deux pièces mâle et femelle du connecteur, tandis que l'extrémité avant de la broche en forme de tige est en saillie par rapport à la face avant de la partie avant du corps de l'autre des deux pièces du connecteur.

Afin de faciliter le guidage des organes de contact auxiliaires l'un par rapport à l'autre, lors de leur venue en coopération, la longueur de la partie des organes de contact auxiliaires qui est en saillie par rapport à la face avant de la partie avant des corps correspondants est inférieure à la longueur de la partie des organes de contact principaux qui est en saillie par rapport à la face avant de la partie avant de ces corps.

Selon un exemple avantageux de réalisation, l'organe de contact auxiliaire mâle est porté par la pièce mâle et l'organe de contact auxiliaire femelle par la pièce femelle du connecteur.

Afin que les travaux d'assemblage des différents éléments du connecteur soient simplifiés, ainsi que la fabrication de ces différents éléments, et notamment afin de permettre une fabrication et un montage automatique ou semi-automatique du connecteur, lorsque ce dernier comprend de plus, pour chacune des pièces mâle et femelle, un couvercle destiné à être fixé de manière amovible sur la partie arrière du corps correspondant et à fermer le logement de la partie avant et la cavité de la partie arrière de ce corps, et qui présente lui-même une cavité s'ouvrant en regard de la cavité de la partie arrière lorsque le couvercle est en position de fermeture, le connecteur selon l'invention se caractérise de plus en ce que chaque pièce mâle ou femelle comporte un élément de sertissage présentant une tête polygonale et un corps cylindrique destiné à recevoir une extrémité dégainée du câble, de sorte que le conducteur auxiliaire vienne en contact avec le corps cylindrique, et la tête polygonale étant destinée à se loger dans la cavité de la partie arrière du corps correspondant ainsi que dans la cavité en regard du couvercle, lesdites cavités ayant une forme correspondante à celle de la tête polygonale.

Suivant une autre caractéristique propre au connecteur selon l'invention, la tête de l'élément de sertissage est reliée au corps de ce dernier par l'intermédiaire d'une gorge permettant à l'élément de sertissage de venir à cheval et de se bloquer par la gorge sur le pourtour de la découpe par laquelle la cavité de la partie arrière du corps correspondant s'ouvre vers l'arrière.

La tête de l'élément de sertissage présente avantageusement une forme hexagonale, tandis que l'extrémité arrière de chaque organe de contact auxiliaire se termine par une partie fendue formant deux languettes élastiques, et la tête de l'élément de sertissage monté sur le corps de chacune des deux parties mâle et femelle du connecteur présente une découpe permettant à cette tête de recevoir les languettes élastiques lors de la mise en place de l'élément de sertissage dans la pièce correspondante mâle ou femelle du connecteur.

Brève description des dessins

La présente invention sera mieux comprise à l'aide d'exemples particuliers de réalisation, décrits ci-après à titre non limitatif, en référence aux figures annexées dans lesquelles:

la figure 1 est une vue en perspective d'un connecteur selon l'invention, montrant la pièce mâle et la pièce femelle en position alignée mais désaccouplées, les couvercles des corps des deux pièces étant enlevés,

la figure 2 est une coupe d'un embout de sertissage fixé à l'extrémité d'un câble destiné à être relié à un connecteur selon l'invention,

la figure 3 est une coupe transversale d'une pièce d'une variante du connecteur selon la figure 1, sur laquelle est fixé un couvercle et dans laquelle est monté l'embout selon la figure 2, la coupe passant au niveau de la tête de l'embout et des cavités de la pièce et du couvercle dans lesquelles la tête est logée, et

la figure 4 est une vue en perspective partielle de la partie arrière du corps d'une pièce mâle ou femelle de la variante du connecteur selon la figure 1.

Meilleure manière de réaliser l'invention

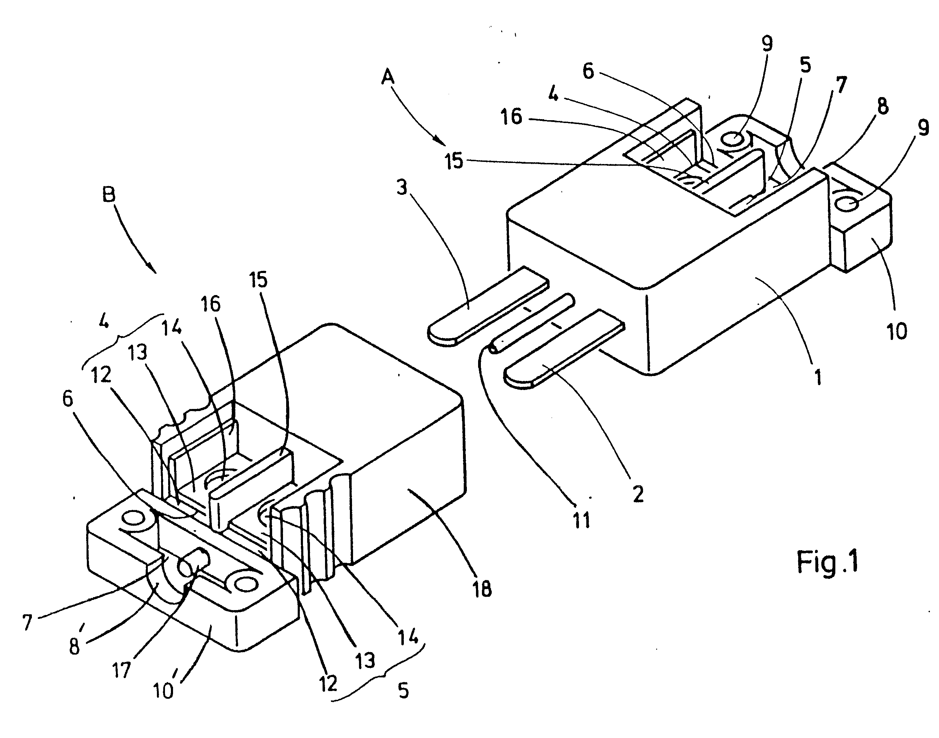

En référence à la figure 1, le connecteur plat comprend une pièce mâle A et une pièce femelle B destinées à être accouplées l'une à l'autre.

La forme des corps des pièces mâle A et femelle B est sensiblement identique, à l'exception de la partie avant 18 du corps de la pièce femelle B qui est plus longue que la partie avant 1 du corps de la pièce mâle A. Les parties A et B du connecteur se distinguent également par les deux organes de contact principaux dont elles sont équipées et qui, pour la pièce mâle A, sont des contacts mâles et, pour la pièce femelle B, des contacts femelles.

La partie avant 1 de la pièce mâle A porte les deux organes mâle de contact principaux 2, 3, qui sont de préférence non identiques (même longueur, mais largeur différente), afin de ne permettre qu'une seule position d'accouplement à la pièce femelle B, ce qui constitue une caractéristique de détrompage.

Ces organes mâles de contact principaux 2 et 3 sont fixés dans la partie avant 1 qu'ils traversent et débouchent au niveau des moyens de fixation 4 et 5 aux conducteurs principaux respectifs (non représentés) d'un câble électrique comportant également un conducteur auxiliaire ou tresse de blindage ou encore un conducteur de masse qui, comme les deux conducteurs principaux, est entouré par la gaine du câble. Ces moyens de fixation 4 et 5 sont constitués par une plaquette conductrice inférieure, une plaquette conductrice supérieure et une vis de serrage des deux plaquettes l'une vers l'autre. Ces moyens seront plus particulièrement décrits en référence à la pièce femelle B du connecteur.

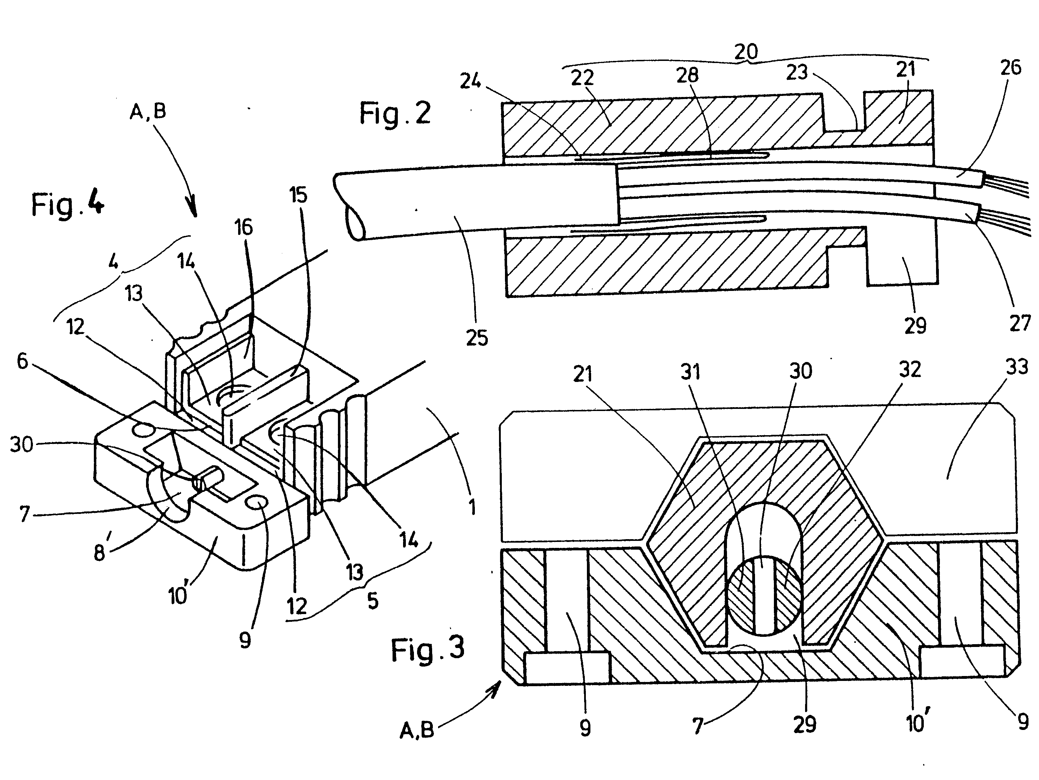

Ces moyens de fixation 4 et 5 sont disposés dans un logement 6 ménagé à l'arrière de la partie avant 1 du corps de la pièce mâle A, et ce logement 6, qui s'ouvre vers la face plane principale qui est la face supérieure du corps sur la figure 1, ainsi que vers l'arrière de ce corps, peut être fermé par un couvercle non représenté sur la figure 1 mais représenté sur la figure 3 et plus particulièrement décrit en référence à cette figure.

Le corps de la pièce mâle A présente également une partie arrière 10 dans laquelle est ménagée une cavité 7, qui s'ouvre également vers la face plane principale qui est la face supérieure du corps, et qui s'ouvre de plus, vers l'arrière par une découpe 8, en arc de cercle, qui permet le passage du câble.

La partie arrière 10 du corps de la pièce mâle A présente des parties latérales qui viennent légèrement en saillie sur les côtés de la partie avant 1 de ce corps pour faciliter la préhension, et des logements 9, contenant des écrous, sont ménagés dans ces parties latérales afin de permettre la fixation du couvercle correspondant sur ce corps au moyen de deux vis dont chacune vient dans l'un des logements 9.

La pièce mâle A du connecteur comprend également un organe de contact mâle auxiliaire 11, qui est constitué par une broche ayant la forme d'une tige pleine située en dessous des organes de contact mâle principaux 2 et 3 et dans une position intermédiaire entre ces derniers. L'expression «en-dessous» utilisée dans la suite du présent mémoire signifie que l'organe de contact mâle auxiliaire 11 se trouve, par rapport à la face plane principale du connecteur plat, constituée par la face supérieure sur la figure 1, et dans laquelle s'ouvre le logement 6, sous les organes de contact mâles principaux 2 et 3, et non entre ces derniers et cette face plane principale du corps de la pièce mâle A qui est la face supérieure sur la figure 1. L'organe de contact mâle auxiliaire 11, qui débouche sur la face avant de la partie avant 1 du corps de la pièce mâle A, traverse cette partie avant 1 et s'étend ainsi non seulement en-dessous des organes de contact mâles principaux 2 et 3, mais également en-dessous des moyens de fixation 4 et 5 aux conducteurs de manière à déboucher dans le fond de la cavité 7 de la partie arrière 10 de ce corps, au niveau de la découpe 8 de passage du câble.

Comme le conducteur auxiliaire ou conducteur de masse de ce câble est en général un conducteur entourant les autres conducteurs principaux, et ayant la forme d'une tresse de blindage afin de former un écran électrique, ce conducteur auxiliaire ou de masse est extérieur, si bien qu'il est avantageux, pour simplifier la disposition des conducteurs principaux au niveau des moyens de fixation 4 et 5, et afin de réduire les boucles formées par ces conducteurs, que l'organe de contact mâle auxiliaire 11 débouche au niveau du fond de la cavité 7, comme cela apparaît en 17 pour le contact auxiliaire femelle de la pièce femelle B, qui est plus précisément décrite ci-dessous.

La liaison de chacun des contacts auxiliaires (mâle ou femelle) aux conducteurs de masse peut se faire en soudant une tresse ou un fil de continuité de masse sur les broches mâle 11 et femelle 17, et cette tresse ou ce fil de continuité de masse peut sortir de la pièce correspondante A ou B du connecteur par la découpe à l'arrière de cette pièce correspondante.

Selon une variante (non représentée), cette liaison est assurée par une pièce intermédiaire maintenue dans le fond de la cavité 7, de forme hexagonale ou généralement polygonale, et la broche mâle 11 ou femelle 17 correspondante est alors reliée électriquement à cette pièce intermédiaire par soudure, brasage, ou par simple contact amélioré par un effet de ressort, puis la pièce intermédiaire est à son tour reliée électriquement au conducteur de masse du câble par brasage, soudage, etc.

Enfin, selon une autre variante, les broches mâle 11 et femelle (17) traversent chacune la partie correspondante A ou B du connecteur et ressortent à l'arrière de cette partie, ou elles peuvent être raccordées électriquement.

Le corps en matière électriquement isolante de la pièce femelle B du connecteur correspond pour l'essentiel au corps isolant de la pièce mâle A. Les parties du corps de la pièce femelle B ainsi que les éléments montés sur cette pièce B qui sont identiques ou semblables aux parties du corps de la pièce mâle A et aux éléments montés sur cette dernière, portent les mêmes références que ci-dessus.

La figure 1 montre de façon plus précise, dans le cas de la pièce femelle B, les organes disposés dans le logement 6 et la forme de la cavité 7 de la partie arrière 10′ de cette pièce B. Les organes femelles de contact principaux de la pièce femelle B, non visible sur la figure 1, sont constitués par des logements de section correspondant à celle des organes mâles de contact principaux 2 et 3 de la pièce mâle A. Pour améliorer le contact, il est avantageux que les deux organes femelles de contact principaux de la pièce femelle B soient constitués chacun par deux languettes élastiques, rappelées élastiquement l'une contre l'autre et qui définissent un passage dans lequel se glisse l'un des deux organes mâles de contact principaux correspondants 2 et 3 de la pièce mâle A, lors de l'accouplement des pièces A et B par enfichage des organes mâles de contact principaux 2 et 3 dans les organes femelles de contact principaux.

Le contact électrique entre la broche mâle 11 et la broche femelle 17, qui constituent les organes respectivement mâle et femelle de contact auxiliaires, est assuré notamment selon l'une des deux réalisations suivantes:

la broche femelle 17 a une section circulaire de dimensions telles que la broche mâle 11 y pénètre avec un frottement suffisant;

la broche femelle 17 est fendue de sorte que l'effet de ressort variable entre les deux portions délimitées sur la broche femelle par la fente, permet d'assurer un contact permanent et positif entre les organes mâle 11 et femelle 17 de contact auxiliaires.

Au niveau du logement 6 de la pièce B, les deux organes femelles de contact principaux sont également en continuité électrique avec deux moyens de fixation 4 et 5 des conducteurs principaux du câble. Ces moyens de fixation 4 et 5 se composent d'une plaquette conductrice inférieure 12, relativement fixe car reçue dans le fond de forme correspondante du logement 6, d'une plaquette conductrice supérieure 13, mobile par rapport à la plaquette inférieure 12, et d'une vis de serrage, destinée à retenir les deux plaquettes 12 et 13 l'une sur l'autre et à les rapprocher l'une de l'autre, et reçue dans un perçage 14 des deux plaques. La vis permet de presser la plaquette supérieure 13 vers la plaquette inférieure 12 après interposition de l'extrémité dénudée (non représentée) du conducteur principal correspondant, afin d'assurer une bonne continuité électrique.

Les deux moyens de fixation 4 et 5 des conducteurs principaux du câble aux organes de contact principaux femelles de la pièce B sont séparés par une cloison d'isolation 15 (que l'on retrouve également sur la pièce mâle A) et qui s'arrête à une certaine hauteur de la face plane principale ou face supérieure de la partie avant 18 du corps de la pièce B, afin de former un épaulement intermédiaire, complémentaire de deux épaulements latéraux 16 (que l'on retrouve également dans le logement 6 de la pièce mâle A) et servant d'appui au couvercle représenté sur la figure 3.

L'organe femelle de contact auxiliaire 17, qui est, comme déjà dit, une broche tubulaire, passe sous la cloison d'isolation 15 et débouche dans le fond de la cavité 7 de la partie arrière 10′ du corps de la pièce femelle B, au niveau de la périphérie extérieure du câble (non représenté).

Bien entendu, il en est de même de l'organe de contact auxiliaire mâle 11 de la pièce A, qui passe également sous la cloison 15 de cette pièce A.

Il subsiste ainsi une épaisseur maximale de matière isolante autour des organes de contact principaux, tels que 2 et 3, des deux pièces A et B. Comme la surface de contact entre les deux organes de contact auxiliaires 11 et 17 peut être beaucoup plus faible que celle qui est nécessaire entre les contacts principaux mâles 2 et 3 et les contacts principaux femelles, afin de n'introduire aucune différence de potentiel, qui serait parasite, les organes de contact auxiliaires 11 et 17 peuvent avoir chacun une section relative plus réduite; cela permet de rapprocher leur position de la face plane principale des corps qui est la plus proche, c'est-à-dire de la face «inférieure» des pièces A et B sur la figure 1, sans réduire ni la tenue mécanique de la fixation des organes de contact principaux, ni celle des organes de contact auxiliaires.

De plus, le passage des organes de contact auxiliaires en-dessous des moyens de fixation 4 et 5 des conducteurs ne réduit en rien l'accessibilité à ces moyens de fixation 4 et 5.

Sur chacune des pièces A et B du connecteur, la disposition en triangle des deux organes de contact principaux correspondants et de l'organe de contact auxiliaire correspondant assure automatiquement le détrompage; cela permet d'avoir des organes de contact principaux mâles 2 et 3, pour la pièce mâle A, et femelles pour la pièce femelle B, qui soient de mêmes dimensions. Cela simplifie la fabrication et le montage des connecteurs.

Sur chacune des pièces A et B du connecteur, les deux organes de contact principaux correspondants occupent des positions symétriques dans un plan parallèle à la face plane principale supérieure du corps correspondant, et l'organe de contact auxiliaire correspondant 11 ou 17 est disposé dans le plan de symétrie des deux organes de contact principaux correspondants tels que 2 et 3.

L'extrémité avant de la broche en forme de tube 17 qui constitue l'organe de contact auxiliaire femelle débouche dans la face avant de la partie avant 18 du corps de la pièce femelle B, tandis que l'extrémité avant de la broche en forme de tige 11 qui constitue l'organe de contact auxiliaire mâle est en saillie par rapport à la face avant de la partie avant 1 du corps de la pièce mâle A du connecteur.

La longueur de la partie de l'organe de contact auxiliaire mâle 11 qui est en saillie par rapport à la face avant de la partie avant 1 du corps de la pièce A est inférieure à la longueur de la partie des organes de contact principaux 2 et 3 qui est en saillie par rapport à cette même face avant de la partie avant 1 du corps de la pièce A. On obtient ainsi que les organes de contact principaux mâles et femelles assurent simultanément une fonction de guidage des organes de contact auxiliaires mâle 11 et femelle 17, car, lorsque ces derniers arrivent en contact, ils sont déjà positionnés dans le prolongement l'un de l'autre, et l'organe de contact auxiliaire mâle 11 pénètre dans l'organe de contact auxiliaire femelle 17, sans risque de manquer l'ouverture tubulaire de ce dernier ou de se tordre lors de la pénétration dans ce dernier, du fait de la coopération préalable par enfichage des organes de contact principaux mâles et femelles.

Bien que les organes de contact auxiliaires 11 et 17 soient respectivement des organes mâle et femelle enfichables, ils peuvent également être constitués par des surfaces de contact apparaissant sur les faces avant des parties avant 1 et 18 des corps des pièces A et B du connecteur.

Les organes de contact auxiliaires 11 et 17 sont fixés dans les corps des pièces A et B de préférence lors du moulage de ces corps en matière isolante, à la manière d'inserts, mais ils peuvent également être collés, emmanchés à force ou emmanchés avec des effets de griffe dans ces corps.

Le raccordement mécanique et la continuité électrique entre les conducteurs auxiliaires et les organes de contact auxiliaires se font de préférence par un point de soudure, puisque l'effort mécanique qui peut être accidentellement exercé sur les câbles est repris par les moyens de fixation 4 et 5 des conducteurs principaux des câbles aux organes principaux de contact des pièces A et B, mais le raccordement mécanique et la continuité électrique précités peuvent également être assurés par serrage au moyen de vis ou par simple contact physique et frottement.

Sur les figures 3 et 4, on a représenté une variante du connecteur selon la figure 1, et dans cette variante, chaque pièce A et B du connecteur comporte un élément de sertissage 20 ayant une tête de section transversale polygonale 21, par exemple hexagonale, reliée à un corps cylindrique circulaire 22 par l'intermédiaire d'une gorge 23. Cet élément 20 est traversé par un perçage axial 24, destiné au passage du câble 25. La gaine du câble 25 est enlevée sur une partie d'extrémité du câble afin de dégager les deux conducteurs principaux 26 et 27 et le conducteur auxiliaire ou blindage 28. Le blindage 28, qui est généralement une tresse métallique conductrice entourant les deux conducteurs 26 et 27, vient en contact avec la paroi du perçage 24. Après que l'extrémité du câble 25 soit ainsi mise en place, on écrase le corps cylindrique 22 afin de sertir cet élément 20 sur l'extrémité du câble 25 et établir le contact entre l'élément de sertissage 20 et le blindage 28. La gorge 23 permet la mise en place de l'élément de sertissage 20 à cheval sur le pourtour de la découpe 8' de forme correspondante, de la partie arrière 10 ou 10' du corps de chaque pièce A ou B du connecteur, comme cela est représenté sur la figure 4 plus précisément décrite ci-après.

La tête 21 présente une section de forme polygonale afin de s'adapter et de se bloquer dans la cavité 7 de forme correspondante réalisée dans la partie arrière 10 ou 10' du corps des pièces A et B.

La tête 21 présente de plus une découpe 29, qui donne à la tête 21 une forme sensiblement en U qui lui permet de coiffer l'extrémité arrière de l'organe de contact auxiliaire 11 ou 17 correspondant.

L'élément de sertissage 20 est réalisé au moins partiellement en un matériau conducteur et, de façon avantageuse, il s'agit d'une pièce en un alliage conducteur tel que du laiton.

La vue en coupe de la figure 3 montre la forme de la cavité 7, qui présente une section en trapèze isocèle correspondant à la moitié inférieure de la forme hexagonale de la tête 21 de l'élément de sertissage 20.

La figure 3 montre également le couvercle 33 fixé sur la partie arrière 10 ou 10' du corps de la pièce A ou B par des vis qui pénètrent dans les logements 9, le couvercle 33 présentant une partie arrière qui a une forme correspondant à celle de la partie arrière 10 ou 10' de la pièce A ou B, tandis que la partie avant du couvercle 33 est rectangulaire et plate, et moins épaisse que sa partie arrière, et vient fermer l'ouverture du logement 6 de la partie avant 1 ou 18 du corps correspondant dans la face plane principale supérieure de ce corps, en prenant appui sur les épaulements 16 dans le logement 6 de sorte que la face supérieure plane du couvercle 33 soit dans le prolongement de la face supérieure plane du corps de la pièce A ou B. Sur la figure 3, est également représentée la cavité ménagée dans le couvercle 33, et qui est symétrique et en regard de la cavité 7 ménagée dans la partie arrière 10 ou 10' du corps correspondant lorsque le couvercle est en position sur ce corps. La chambre délimitée par la cavité 7 de la partie arrière 10 ou 10' et par la cavité du couvercle 33 présente ainsi une section qui correspond exactement à celle de la tête 21 de l'élément de sertissage 20, et cette tête 21 peut ainsi être logée et bloquée dans cette chambre.

La figure 3 montre également la découpe 29 qui permet à la tête 21 de coiffer l'extrémité arrière 30 de l'organe de contact auxiliaire 11 ou 17 correspondant, cette extrémité arrière 30 étant de préférence la même pour l'organe de contact auxiliaire mâle 11 et femelle 17 montés respectivement sur la pièce mâle A et sur la pièce femelle B du connecteur, comme cela a été décrit ci-dessus en référence à la figure 1.

L'extrémité arrière 30 de chaque organe de contact auxiliaire 11 et 17 est fendue afin de former deux languettes élastiques 31 et 32, dont l'orientation est perpendiculaire au plan de jonction du couvercle 33 correspondant et de la partie arrière 10 ou 10' de la pièce mâle A ou femelle B correspondante, c'est-à-dire que cette orientation est verticale sur la figure 3, de sorte que l'extrémité arrière 30 puisse être coiffée élastiquement par la tête 21 de l'organe de sertissage 20.

La figure 4 représente en perspective la forme de la partie arrière 10 ou 10' de la pièce A ou B du connecteur, et notamment la forme de la cavité 7.

Par rapport au mode de réalisation représenté sur la figure 1, la découpe 8' est agrandie puisqu'elle sert à recevoir la gorge 23 de l'élément 20.

En effet, selon le mode de réalisation de la figure 1, la découpe 8, par laquelle la cavité 7 de la partie arrière 10 ou 10' s'ouvre vers l'arrière, sert au passage relativement étanche du câble 25, alors que dans la variante sur les figures 2 à 4, la découpe 8' correspondante sert à recevoir l'élément de sertissage 20, dont le diamètre à fond de gorge 23 est légèrement supérieur à celui du câble 25. Cette figure 4 montre également la position de la partie arrière fendue 30 de l'organe de contact auxiliaire mâle ou femelle correspondant, respectivement tel que 11 ou 17 sur la figure 1.

Cette variante facilite considérablement les opérations de raccordement des trois conducteurs du câble blindé 25 sur une pièce mâle A ou sur une pièce femelle B dont les dimensions sont relativement miniaturisées. La simplification au niveau de la connexion du blindage 28 est particulièrement intéressante.

Grâce aux différents moyens de l'invention, le montage de chaque pièce du connecteur est considérablement simplifié, puisqu'il suffit de mettre en place l'élément de sertissage 20 après avoir dégainé de façon appropriée l'extrémité du câble 25, puis de sertir le corps 22 de l'élément de sertissage 20 pour établir le contact avec le blindage 28 de ce câble 25. Les deux conducteurs principaux 26 et 27 qui sont à relier aux organes de contact principaux tels que les contacts mâles 3 et 4 de la pièce A sur la figure 1, sont en saillie par rapport à l'élément de sertissage 20. Ils peuvent dont être dénudés et raccordés au connecteur de façon appropriée par serrage entre deux plaques conductrices telles que 12 et 13 sur la figure 1 de leurs extrémités dénudées.

Comme l'organe de contact auxiliaire tel que 11 ou 17 se termine par une extrémité 30 en saillie dans la cavité 7 recevant la tête 21 de l'élément de sertissage 20 et que cette tête 21 présente une découpe 29 qui lui permet de coiffer l'extrémité 30 de l'organe de contact auxiliaire, on obtient ainsi un contact particulièrement efficace et pratique, en raison de l'élasticité présentée par l'extrémité 30, du fait qu'elle est fendue et constituée par les deux languettes creuses ou pleines 31 et 32 qui sont ainsi formées.

**Revendications**

1. Connecteur plat pour sonde telle que sonde à résistance ou thermo-couple comprenant une pièce mâle (A) et une pièce femelle (B) destinées à être reliées chacune à l'un d'au moins deux conducteurs électriques principaux (26, 27) d'un câble (25) comprenant une gaine qui entoure les conducteurs principaux et au moins un conducteur électrique auxiliaire (28), les pièces (A) et (B) étant formées chacune d'un corps en une matière électriquement isolante qui comporte d'une part une partie avant (1, 18) portant deux organes de contact principaux (2, 3) qui sont respectivement des organes de contact mâles et des organes de contact femelles, et présentant un logement (6) s'ouvrant vers l'arrière et vers une face plane principale du corps et contenant des moyens de fixation (4, 5) des conducteurs principaux (26, 27) respectivement aux deux organes de contact principaux de la pièce (A) ou (B) correspondante, et d'autre part, une partie arrière (10, 10') qui présente une cavité (7) s'ouvrant également vers la face plane principale du corps et vers l'arrière par une découpe (8, 8') destinée au passage des conducteurs (26, 27), caractérisé en ce que chacune des deux pièces (A et B) comporte l'un de deux organes de contact auxiliaires (11, 17) destinés à coopérer l'un avec l'autre lorsque les deux pièces (A et B) sont accouplées de sorte que les organes de contact principaux mâles (2, 3) de l'une coopèrent avec les organes de contact principaux femelles de l'autre, chacun des organes de contact auxiliaires (11, 17) débouchant à l'avant de la partie avant (1, 18) du corps de la pièce mâle (A) ou femelle (B) correspondante, et étant relié à la partie arrière (10, 10') de ce corps en débouchant dans la cavité (7), afin d'être relié au conducteur auxiliaire (28) en passant, par rapport à la face plane principale du corps, en-dessous des orgánes de contact principaux (2, 3) dans la partie avant (1, 18) et des moyens de fixation (4, 5) dans le logement (6), en occupant une position intermédiaire entre la position des deux organes de contact principaux correspondants.

2. Connecteur selon la revendication 1, dans lequel, sur chacune des pièces (A et B), les deux organes de contact principaux (2, 3) occupent des positions symétriques dans un plan parallèle à la face plane du corps correspondant, le logement (6) de la partie avant (1, 18) du corps étant subdivisé par une cloison (15) d'isolation électrique séparant au moins partiellement les moyens de fixation (4, 5) des deux conducteurs (26, 27) aux deux organes de contact principaux portés par ce corps, caractérisé en ce que chaque organe de contact auxiliaire (11, 17) est disposé dans le plan de symétrie des deux organes de contact principaux (2, 3) correspondants et passe sous la cloison d'isolation (15) du corps de la pièce (A) ou (B) correspondante.

3. Connecteur selon la revendication 1, caractérisé en ce que les deux organes de contact auxiliaires sont l'un un organe de contact mâle (11), constitué par une broche en forme de tige, et l'autre un organe de contact femelle (17), constitué par une broche en forme de tube, dans lequel l'organe de contact auxiliaire mâle (11) est destiné à s'enficher.

4. Connecteur selon la revendication 3, caractérisé en ce que l'extrémité avant de la broche en forme de tube (17) débouche dans la face avant de la partie avant (18) du corps de l'une des deux pièces (A) et (B) du connecteur, tandis que l'extrémité avant de la broche en forme de tige (11) est en saillie par rapport à la face avant de la partie avant (1) du corps de l'autre des deux pièces (A) et (B).

5. Connecteur selon l'une des revendications 3 et 4, caractérisé en ce que la longueur de la partie des organes de contact auxiliaires (11, 17) qui est en saillie par rapport à la face avant de la partie avant (1, 18) des corps correspondants est inférieure à la longueur de la partie des organes de contact principaux (2, 3) qui est en saillie par rapport à la face avant de la partie avant (1, 18) de ces corps.

6. Connecteur selon l'une des revendications 3 à 5, caractérisé en ce que l'organe de contact auxiliaire mâle (11) est porté par la pièce mâle (A) et l'organe de contact auxiliaire femelle (17) par la pièce femelle (B) du connecteur.

7. Connecteur selon l'une des revendications 1 à 6, comprenant de plus, pour chacune des pièces (A et B), un couvercle (33) destiné à être fixé de manière amovible sur la partie arrière (10, 10') du corps correspondant et à fermer le logement (6) de la partie avant (1, 18) et la cavité (7) de la partie arrière (10, 10') de ce corps, et qui présente lui-même une cavité s'ouvrant en regard de la cavité (7) de la partie arrière (10, 10') lorsque le couvercle (33) est en position de fermeture, caractérisé en ce que chaque pièce (A et B) comporte un élément de sertissage (20) présentant une tête polygonale (21) et un corps cylindrique (22) destiné à recevoir une extrémité dégainée du câble (25) de sorte que le conducteur auxiliaire (28) vienne en contact avec le corps cylindrique (22), et la tête polygonale (21) étant destinée à se loger dans la cavité (7) de la partie arrière (10, 10') du corps correspondant ainsi que dans la cavité en regard du couvercle (33), lesdites cavités ayant une forme correspondante à celle de la tête polygonale (21).

8. Connecteur selon la revendication 7, caractérisé en ce que la tête (21) de l'élément de sertissage (20) est reliée au corps cylindrique (22) par l'intermédiaire d'une gorge (23) permettant à l'élément de sertissage (20) de venir à cheval et de se bloquer par la gorge (23) sur le pourtour de la découpe (8') par laquelle la partie arrière (10, 10') du corps des parties (A et B) s'ouvre vers l'arrière.

9. Connecteur selon la revendication 7, caractérisé en ce que la tête (21) a une forme hexagonale.

10. Connecteur selon la revendication 7, caractérisé en ce que l'extrémité arrière (30) de chaque organe de contact auxiliaire (11, 17) se termine par une partie fendue formant deux languettes (31, 32) élastiques, et la tête (21) de l'élément de sertissage (20) monté sur le corps de chacune des deux parties (A et B) du connecteur présente une découpe (29) permettant à la tête (21) de recevoir les languettes élastiques (31, 32) lors de la mise en place de l'élément de sertissage (20) dans la pièce correspondante (A ou B) du connecteur.

**Claims**

1. Flat connector for probes such as resistance probe or thermocouple, composed of a male part A and a female part B, each intended to be connected at one of at least two principal electrical conductors 26 and 27 of a cable 25 composed of a jacket over the principal conductors and at least one auxiliary electrical conductor 28, each part A and B being composed of a body of electrically isolating matter which is composed, on one hand of a front part 1 and 18, bearing two principal organs contact 2, 3 respectively the male organs of contact and the female of contact, and presenting a logging 6 opening towards the rear and towards a main flat face of the body, and containing means of fixation 4 and 5 to fix the principal conductors 26, 27, respectively to the two principal organs of contact of the corresponding part A or B, and on the other hand, a rear part 10 or 10' presenting a cavity 7, opening also towards the main flat face of the body and towards the rear through a cut-out 8 or 8' meant for the passage of the conductors 26, 27, characterised in that each of the two pieces A and B is composed of one of the two auxiliary organs of contact 11 and 17 meant for cooperating with each other when the two parts A and B are coupled so that the principal male organs of contact 2, 3 of one cooperate with the principal male organs of contact of the other, each auxiliary organs of contact 11 and 17 coming out in the front of the front part of the body of the corresponding male A or female part B, and connected to the rear part 10 or 10' of that body by coming into the cavity 7, in order to be connected to the auxiliary conductor 28 by passing, in relation to the principal flat face of the body, under the principal organs of contact 2, 3, in the front part 1, 18 and under the means of fixation 4, 5, in the logging 6, occupying an intermediate position between the position of the two corresponding principal organs of contact.

2. Connector according to claim 1 in which, on each of part A and B, the two organs of principal contact 2, 3 occupy symetrical positions in an angle parallel to the plate side of the corresponding body, the lodging 6 of the front part 1, 18 of the body being subdivided by a partition 15 of electrical insulation separating at least partially the means of fixation 4, 5 of the two conductors 26, 27 of the two organs of principal contact born by this body, characterised by the fact that each organ of auxiliary contact is placed in the symetrical plan of the two corresponding organs of principal contact and pass under the partition of insulation 15 of the body of corresponding parts A or B.

3. Connector according to claim 1 characterised by the fact that the two organs of auxiliary contact are for one an organ of male contact 11 constituted by a pin in the shape of a stem, and the other an organ of female contact 17 constituted by a pin in the form of a tube, in which the organ of auxiliary male contact 11 is destined to be connected.

4. Connector according to claim 3 characterised by the front extremity of the pin in the form of a tube 17 coming out in the front side of the part 18 of the body of one of the two parts A and B of the connector, whereas the front extremity of the pin in the form of a stem 11 is protruding from the front surface of the front part 1 of the body of the other of the two part A and B.

5. Connector according to one of the claims 3 and 4, characterised by the length of the part of the organs of auxiliary contact 11, 17, which is protruding with regard to the front surface of the front part 1, 18 of the corresponding bodies, is inferior to the length of the part of the organs of principal contact 2, 3 which is protruding in the regard to the surface of the front part 1, 18 of these bodies.

6. Connectors according to one of the claims 3 to 5, characterised by the organ of auxiliary contact being born by the male part A and the organ of auxiliary female contact 17 by the female part B of the connector.

7. Connector according to one of claims 1 to 6 including furthermore for each of pieces A and B a cover 33 destined to be fixed, but in a removable way, on the back part 10, 10' of the corresponding body and to shut the lodging 6 of the front part 1, 18 and the cavity 7 of the back part 10, 10' of this body, and which present himself a cavity opening in front of cavity 7 of the back part 10, 10' when the cover 33 is in the closed position, characterised by the fact that each piece A and B includes a crimping adaptor 20 having a polygonal head 21 and a cylindrical body 22 destined to receive a striped end of the cable 25 so that the auxiliary conductor 28, come in contact with the cylindrical body 22 and the polygonal head 21 made to be positioned in the cavity 7 of the back part 10, 10' of the corresponding body and in the cavity in front of the cover 33, said cavities having a shape corresponding to that of the polygonal head 21.

8. Connector according to claim 7 characterised by the fact that the head 21 of the crimping adaptor 20 is attached to the cylindrical 22 body by a means of a grooved area 23 allowing the crimping 20 element to be positioned and blocked by the groove 23 on the edge of the cut-out 8' by which the back part 10, 10' of the parts A and B opens in the back.

9. Connector according to claim 7 characterised by the fact that the head 21 has an hexagonal head shave.

10. Connector according to claim 7, characterised by the fact that the back end 30 of each organ of auxiliary contact 11, 17 is terminated by a slit part forming two spring like tongues 31, 32, and the head 21 of the crimping adaptor 20 mounted on the body of each of the two parts A and B of the connector has a cut-out 29 allowing the head 21 to receive the spring effect tongues 31, 32 at the time of the setting in place of the crimping element 20 in the corresponding part A or B of the connector.

**Patentansprüche**

1. Flacher Stecker für Sonde, wie Sonde mit Widerstand oder Thermopaar, bestehend aus einem Kupplungsstecker (A) und einer Kupplungsdose (B), die jeder dazu bestimmt sind mit mindestens zwei elektrischen Hauptleitungen (26, 27) eines Kabels (25) verbunden zu werden, bestehend aus einem Isolator, der die Hauptleitungen umhüllt, und einer elektrischen Hilfsleitung (28).

Die Teile (A) und (B) bestehen jeweils aus einem Körper aus einem Material, das vor der Elektrizität isoliert. Dieser Körper besteht einerseits aus einem vorderen Teil (1, 18), das zwei Hauptkontaktorgane trägt (2, 3), die jeweils männliche und weibliche Kontaktorgane sind, und der eine Kavität hat (6), die sich nach hinten öffnet zu einer flachen Hauptseite des Körpers und Anschlussmöglichkeiten (4, 5) der Hauptleitungen (26, 27) an jeweils die beiden Hauptkontaktorgane des entsprechenden Teils (A) oder (B) bietet, und andererseits, aus einem hinteren Teil (10, 10'), das eine Kavität (7) darstellt, die sich ebenfalls zu der flachen Hauptseite des Körpers öffnet und nach hinten durch einen Ausschnitt (8, 8'), bestimmt für den Durchgang der Leitungen (26, 27), charakterisiert dadurch, dass jedes der beiden Teile (A und B) einen der beiden Hilfskontaktorgane (11, 17) trägt, dazu bestimmt miteinander zu funktionieren, wenn die beiden Teile (A und B) so verkuppelt sind, dass die männlichen Hauptkontaktorgane (2, 3) des einen mit den weiblichen Hauptkontaktorganen des anderen zusammenfunktionieren, jedes der Hilfskontaktorgane (11, 17) mündet vorne am vorderen Teil (1, 18) des Körpers des entsprechenden männlichen (A) oder weiblichen (B) Teils und ist mit dem hinteren Teil dieses Körpers (10, 10') verbunden, indem es in die Kavität mündet (7), um mit der Hilfsleitung (28) verbunden zu werden, wobei es, verglichen mit der flachen Hauptseite des Körpers, unter den Hauptkontaktorganen (2, 3) liegt, in dem vorderen Teil (1, 18) mit Anschlussmöglichkeiten (4, 5) in der Kavität (6), indem es eine Zwischenposition einnimmt, zwischen der Position der beiden jeweiligen Hauptkontaktorgane.

2. Stecker gemäss des Anspruchs 1, in dem, auf jedem der Teile (A und B) die beiden Hauptkontaktorgane (2, 3) symmetrische Positionen einnehmen in einem parallelen Plan zur flachen Seite des jeweiligen Körpers, die Kavität (6) des vorderen Teils (1, 18) des Körpers ist durch eine Wand unterteilt (15), die elektrisch isoliert und die zumindest teilweise die Anschlussmöglichkeiten (4, 5) der beiden Leitungen (26, 27) an die Hauptkontaktorgane, die von diesem Körper getragen werden, trennt, dadurch charakterisiert dass jedes Organ des Hilfskontakts (11, 17) symmetrisch zu den jeweiligen beiden Hauptkontaktorganen (2, 3) verteilt ist und unter der Isolierwand (15) des Körpers des entsprechenden Teils (A) oder (B) durchgeht.

3. Stecker gemäss des Anspruchs 2, dadurch charakterisiert, dass die beiden Hilfskontaktorgane einerseits ein männliches Kontaktorgan ist (11) bestehend aus Kontaktstiften, und das andere ein weibliches Kontaktorgan (17), bestehend aus Kontaktbuchsen, in die das männliche Hilfskontaktorgan (11) eingeführt werden soll.

4. Stecker gemäss des Anspruchs 3, dadurch charakterisiert, dass das äusserste vordere Ende der Kontaktbuchse in Form eines Röhrchens (17) in die vordere Seite des vorderen Teils (18) des Körpers der einen der beiden Teile (A) und (B) des Steckers mündet, während das äusserste vordere Ende des Kontaktstifst in Form eines Stifts (11), verglichen mit der vorderen Seite des vorderen Teils (1) des Körpers des anderen der beiden Teile (A) und (B) hervorragt.

5. Stecker gemäss einer der beiden Ansprüche 3 und 4, dadurch charakterisiert, dass die Länge des Teils der Hilfskontaktorgane (11, 17) die, verglichen mit der vorderen Seite des vorderen Teils (1, 18) der entsprechenden Körper, hervorragt, geringer ist, als die Länge des Teils der Hauptkontaktorgane (2, 3), das, verglichen mit der vorderen Seite des vorderen Teils (1, 18) dieses Körpers, hervorragt.

6. Stecker gemäss einer der Ansprüche 3 bis 5, dadurch charakterisiert, dass das Hilfskontaktorgan (11) von dem Kupplungsstecker (A) getragen wird, und das weibliche Hilfskontaktorgan (17) von der Kupplungsdose (B) des Steckers.

7. Stecker gemäss einer der Ansprüche 1 bis 6, ausserdem bestehend, für jeden der Teile (A und B) aus einem Deckel (33), der dazu bestimmt ist, in abnehmbarer Weise, an dem hinteren Teil (10, 10') des entsprechenden Körpers befestigt zu werden, und die Kavität (6) des vorderen Teils (1, 18) und die Kavität (7) des hinteren Teils (10, 10') dieses Körpers zu schliessen, und der selbst eine Kavität enthält, die sich zu der Kavität (7) des hinteren Teils (10, 10') öffnet, wenn der Deckel (33) in geschlossener Position ist, dadurch charakterisiert, dass jedes der Teile (A und B) ein Fassungselement enthält (20) mit einem polygonalen Kopf (21) und einem zylindrischen Körper (22) dazu bestimmt, sich in die Kavität (7) des hinteren Teils (10, 10') des entsprechenden Körpers einzufügen, sowie in die Kavität des Deckels (33), diese Kavitäten haben jeweils eine Form, die dem polygonalen Kopf (21) entspricht.

8. Stecker gemäss des Anspruchs 7, dadurch charakterisiert, dass der Kopf (21) des Fassungselements (20) mit einem zylindrischen Körper (22) mit Hilfe eines Halses (23) verbunden ist, der dem Fassungselement (20) erlaubt, sich dem Umriss des Ausschnitts (8') anzupassen, durch den der hintere Teil (10, 10') des Körpers der Teile (A und B) sich nach hinten öffnet, und sich durch den Hals zu blockieren (23).

9. Stecker gemäss des Anspruchs 7, dadurch charakterisiert dass der Kopf (21) eine hexagonale Form hat.

10. Stecker gemäss der Forderung 7, dadurch charakterisiert, dass das äusserste hintere Ende (30) jedes Hilfskontaktorgans (11, 17) in einem gespaltenen Teil endet, das zwei elastische Zungen bildet (31, 32), und der Kopf (21) des Fassungselements (20), das auf den Körper jedes der beiden Teile (A und B) montiert ist, zeigt einen Umriss (29), der dem Kopf (21) erlaubt, die elastischen Zungen (31, 32) zu empfangen, wenn das Fassungselement (20) in dem entsprechenden Teil (A oder B) des Steckers angebracht wird.

Fig.1

Fig.2

Fig.4

A,B

Fig.3

A,B

0 099 384